# EUROPEAN PATENT APPLICATION

(11) **EP 0 901 125 A1**
(43) Date of publication of application: **10.03.1999**
(21) Application number: 97306960.2
(22) Date of filing: 08.09.1997
(51) Int. Cl.: G11B 20/10, G11B 20/22

(54) **Clock recovery for tape data storage system**

(71) Applicant: Hewlett-Packard Company, Palo Alto, California 94304 (US)
(72) Inventor: Willcocks, Benjamin Alec, Bristol BS9 1LH (GB)
(74) Representative: Lawman, Matthew John Mitchell

(57) **Abstract**

A magnetic tape data storage mechanism having variable speed tape utilizes a clock reference signal encoded into data recorded along a length of the tape. To write a clock signal under conditions of variable tape speed, a preformatted pre-recorded servotrack on the tape is read to produce a servotrack signal, the servotrack signal having a frequency directly proportional to a speed of the tape past a write head. The servotrack signal is multiplied (902) to produce a clock reference signal frequency which is directly proportional to a speed of the tape past the read head. To avoid a clock signal generator (1000) locking to an unwanted harmonic of the clock reference signal, a limiter circuit (1104) is applied which produces limit signals deduced from a coarse speed measurement signal (S) obtained eg. from a closed loop control mechanism of the tape drive mechanism. The generated clock reference signal is compared with the coarse tape speed signal, and a clock signal generator is reset to output a signal corresponding to the tape speed if the generated clock reference signal varies outside the predetermined limits. In a further implementation, to read a clock signal already recorded on the encoded data, under conditions of variable tape speed, a clock signal recovery circuit (402) comprises a clock signal generator (403) which is used to regenerate a reference clock signal. To avoid the clock signal generator locking to an harmonic frequency of the encoded clock reference signal, the clock signal generator is reset to a nominal frequency representative of an expected clock signal frequency as determined from a course speed signal (S), the coarse speed signal (S) being obtained eg. from a closed loop tape drive circuit.

## Description

### Field of the Invention

The present invention relates to a method and apparatus for generation and recovery of a clock reference signal in a magnetic tape data storage device, and particularly although not exclusively in a magnetic tape data storage device operating a variable tape speed.

### Background to the Invention

Conventional magnetic tape data storage systems comprise an elongate band of magnetic tape which is wound between first and second reels, the tape passing a substantially static read/write head, to produce a physically recorded data track on the tape which extends along a main length of the tape. The tape speed is maintained substantially constant past the read/write head, subject to minor variations in tape speed due to tolerances in the tape drive mechanism. It is known to incorporate an encoding algorithm into the data as it is recorded onto the tape for the purpose of providing a reference clock signal which can be subsequently read when the tape is played back. The encoding algorithm ensures that the bits of digital data recorded onto the tape are recorded in a manner in which a clock reference frequency signal, or an harmonic of a clock reference frequency signal, is embedded in the recorded data such that the clock signal can be recovered from the encoded data signal.

Since in the conventional tape storage device the tape passes the read/write head at constant speed, the optimum data rate of writing to the tape which is required for achieving maximum stored data density, is a constant data rate.

However, data arriving from a data source from which data is to be stored, eg a host apparatus such as a computer, does not always arrive at a constant rate. Typically, computer generated data is of a "bursty" nature in which large blocks of data arrive intermittently and at irregular intervals. Under these conditions, the conventional tape storage device stops the passage of the tape past the read/write heads during periods when no data arrives, and restarts the passage of the tape past the read/write head when data arrives from the host device. Frequent stop/starting of the tape incurs a high wear on components of tape drive mechanisms, and also produces relatively high wear on the tapes themselves.

One solution to the problem of components and tape wear is to operate a tape drive mechanism in which the speed of the tape is varied, according to the rate of data arriving from a data source. During periods of low rate of data arrival, the tape speed is slowed down, and during periods of high rate of arrival of data, the tape speed is increased. By this method, stopping and starting of a tape can be minimized. It is desirable to continuously wind a tape along its whole length from one end to the other in a single continuous movement without stop/starting the tape, as this enables increased reliability of tape mechanism drive components, more uniform winding of a tape onto a reel, and reductions in accelerations of the tape when stopping and starting. Such a continuous movement of a tape from one end to another, being wound from a first reel completely onto a second reel in a single continuous movement, is known as "continuous streaming".

However, the provision of a variable speed tape drive mechanism presents the problem of how to record and recover a stable clock reference signal onto a magnetic tape where the tape speed varies over a wide range of speeds.

### Summary of the Invention

One objective according to the present invention is to provide frequency stability of read clock signal recovery in a variable tape speed magnetic tape speed data storage device, and avoidance of locking to a harmonic frequency of a recovered clock signal.

A second objective of the present invention is to provide a stable and accurate clock reference signal of variable frequency for writing to data recorded on a variable speed tape.

According to one aspect of the present invention there is provided a method of determining a frequency of a reference clock signal in a magnetic tape data storage device, said method comprising the steps of:
generating a read signal corresponding to a signal recorded on a tape;
generating a clock reference signal corresponding to said recorded tape signal;
generating a difference signal representing a difference between said recorded tape signal and said generated clock reference signal;
obtaining a signal representing a fundamental frequency of said recorded tape signal from said difference signal; and
constraining said signal representing a fundamental frequency of said recorded tape signal.

Said tape data storage device may operate at a variable speed.

Preferably, said signal representing a fundamental frequency of said recorded tape signal is constrained in response to a signal representing a speed of tape.

Suitably, a said signal representing a fundamental frequency of recorded tape signal is constrained within upper and lower limits, said upper and lower limits being determined from a signal representing a speed measurement of a tape.

Said signal representing a speed of said tape my be determined from a control signal of a tape drive mechanism.

Preferably, said read signal comprises a fundamental frequency representative of a tape speed.

Said signal recorded on tape may comprise a servotrack signal prerecorded onto a length of tape.

Said recorded tape signal may comprise an encoded clock reference signal.

Preferably, said step of constraining said signal representing a fundamental frequency of said recorded tape signal comprises:
determining a lower limit signal representing a lower limit of a fundamental frequency of said read signal;
determining an upper limit signal representing an upper limit of fundamental frequency of said read signal; and
comparing said signal representing fundamental frequency with said upper limit signal and said lower limit signal.

Preferably, said step of constraining said signal representing a fundamental frequency comprises:
determining a nominal value signal representing a nominal fundamental frequency of said read signal, said nominal value signal determined from a measurement of tape speed; and
re-setting said signal representing a fundamental frequency to a value of said nominal value signal representing a nominal fundamental frequency of said recorded tape signal.

Preferably, said step of generating a clock signal corresponding to said recorded tape signal comprises tracking a phase of said generated clock signal to a phase of a fundamental frequency of said recorded tape signal.

Suitably, said signal recorded on tape has a substantially constant wavelength along the length of said tape.

The invention includes a magnetic tape data storage device having a clock signal write circuit comprising:
clock signal production means for producing a clock signal from a signal recorded on tape;
means for determining a coarse expected value of clock signal frequency from a measurement of tape speed;
means for determining upper and lower limits of an expected clock signal frequency from said tape speed measurement; and
   wherein said means for producing a clock signal from said signal recorded on tape is reset to adopt a value specified by said means for determining a coarse expected value of clock signal frequency from said tape speed, whenever said clock signal production means produces a clock signal having a frequency outside said limits.

The invention includes a method of determining a frequency of a reference clock signal in a magnetic tape data storage device, said method comprising the steps of:
reading a pre-recorded tape signal;
generating a clock reference signal, said clock reference signal having a fundamental frequency being an integer multiple of a fundamental frequency of said recorded tape signal;
generating upper and lower limit signals representing upper and lower limits of said fundamental frequency of said generated clock signal;
continuously comparing said generated clock signal with said upper and lower limits; and
if said generated clock signal exceeds said upper or lower limits, resetting said fundamental frequency to a nominal frequency determined from a tape speed measurement.

The invention includes a magnetic tape data storage device having a clock signal recovery circuit comprising:
clock signal production means for producing a clock signal from a clock signal encoded in data signal recorded on tape;
means for determining a coarse measurement of clock signal frequency from a measurement of tape speed; and
means for determining upper and lower limits of an expected clock signal frequency, from said tape speed measurement;
   wherein said means for producing a clock signal from said data signal recorded on tape is reset to adopt a value specified by said means for determining a coarse measurement of clock signal frequency from said tape speed, whenever said clock signal production means produces a clock signal having a frequency outside said limits.

The invention includes a means of constraining an operation of a phase locked loop which locks to a signal read from a tape in a tape drive mechanism, according to approximate speed measurements such that harmonic locking is avoided, yet performance is not impaired by a noisy and/or approximate nature of the speed measurement. The tape drive mechanism suitably comprises a variable speed tape drive mechanism.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates a prior art read/write head arrangement, having a plurality of read elements for reading a plurality of parallel data tracks physically recorded along an elongate magnetic tape, and a prior art clock recovery channel;
Fig. 2 illustrates internal stages of a prior art phase locked loop of the prior art clock recovery channel of Fig. 1;
Fig. 3 illustrates in further detail a loop filter element of the prior art phase locked loop of Fig. 2;
Fig. 4 illustrates a read channel for reading an encoded clock reference signal from a track of recorded data on an elongate magnetic tape in accordance with a first specific implementation of the present invention;
Fig. 5 illustrates schematically elements of a loop filter of the read channel of Fig. 4;
Fig. 6 illustrates schematically in further detail the loop filter arrangement as described with reference to Fig. 5;
Fig. 7 illustrates schematically a method of operation of the read channel of Fig. 6;
Fig. 8 illustrates schematically a layout of a servotrack signal applied to an elongate magnetic tape, and from which a clock reference signal is determined according to the second specific implementation of the present invention;
Fig. 9 illustrates schematically a write channel for producing a write clock reference signal for encoding into data written onto an elongate magnetic tape according to a second specific implementation of the present invention;
Fig. 10 illustrates schematically elements of a phase locked loop of the write channel of Fig. 8;
Fig. 11 illustrates schematically elements of the loop filter of the write channel of Fig. 8;
Fig. 12 illustrates schematically in further detail the loop filter arrangement of Fig. 11; and
Fig. 13 illustrates schematically a method of operation of the write channel.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without using these specific details. In other instances, well known methods and structures have not been described in detail so as not to unnecessarily obscure the present invention.

The following example of operation of a prior art clock recovery signal circuit illustrates a problem of harmonic locking which is apparent particularly under conditions of variable tape speed, and illustrates an unsuitability of a prior art clock signal recovery circuit for variable tape speed operation.

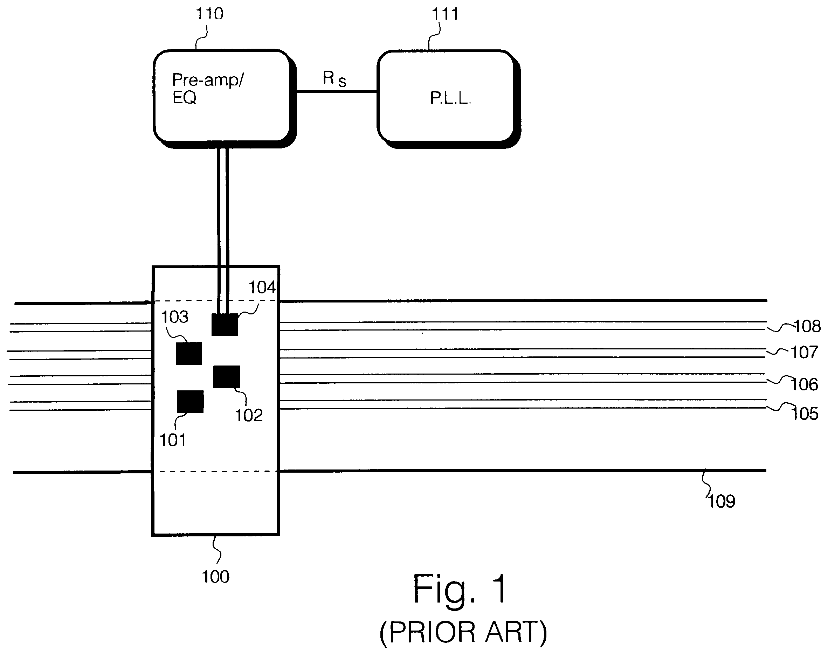

Referring to Figs. 1 to 3 herein, there is illustrated schematically a prior art method of clock signal recovery in a conventional magnetic tape data storage device. The prior art arrangement illustrated in Figs. 1 to 3 herein relates to a generic clock recovery scheme which is applicable to both analogue and digital implementations. A conventional read/write head 100 comprises a plurality of read elements and a plurality of write elements. In the example of Fig. 1, four read elements 101 to 104 are illustrated. Each read element aligns with a physically recorded data track 105 to 108 of a magnetic tape 109 and reads encoded data as the magnetic tape passes the read/write head. Each read element generates a corresponding respective read data channel signal which is input into a pre-amplifier and equalizer 110. The pre-amplifier/equalizer outputs an amplified equalized read data channel signal R_{S} into a phase locked loop circuit 111 for recovery of the clock reference signal from the encoded data.

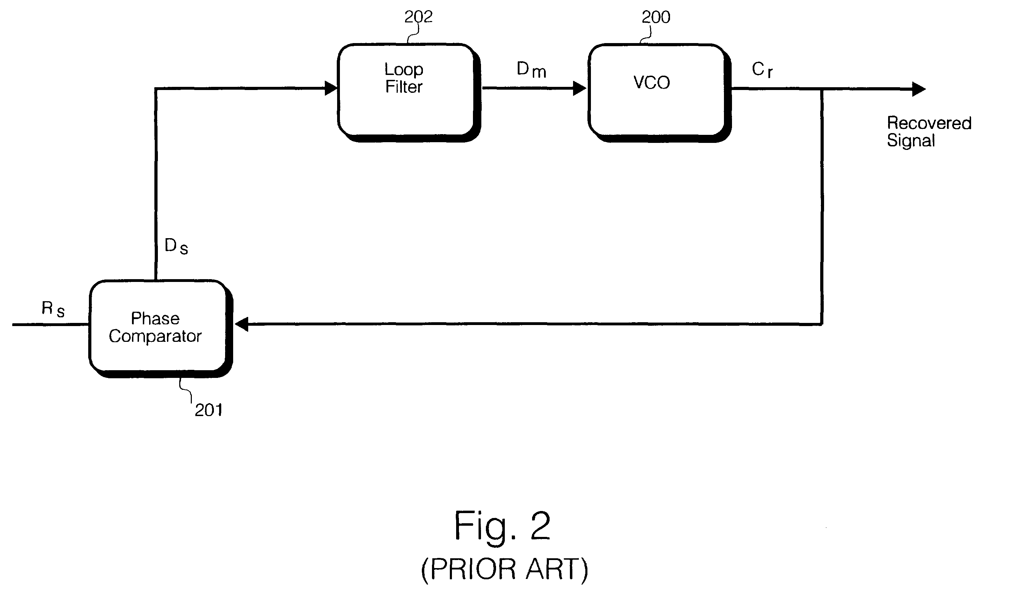

Referring to Fig. 2 herein, there is illustrated internal stages of the phase locked loop 111 for recovering a clock reference signal from a read signal generated by a single read element in response to signals recorded on a data track. The phase locked loop comprises a clock signal generator 200, which in an analogue implementation may comprise a voltage controlled oscillator, or in a digital implementation may comprise a digital divider which divides a fixed frequency digital signal to produce a digital clock reference signal Cᵣ; a phase comparator 201 for comparing a phase of the generated clock reference signal Cᵣ with the incoming pre-amplified equalized read signal, the phase comparator generating a difference signal D_{S}; and a loop filter 202, which amplifies the difference signal D_{S} to produce a modified difference signal D_{M}, which is used to control the phase and frequency of the clock signal Cᵣ produced by the clock signal generator 200.

The frequency of the clock reference signal generated by clock reference signal generator 200 is increased or decreased, depending upon the value of the modified difference signal D_{M}, so that the frequency and phase of generated clock reference signal Cᵣ follows the frequency and phase of the clock reference signal encoded into the read data channel signal R_{S}.

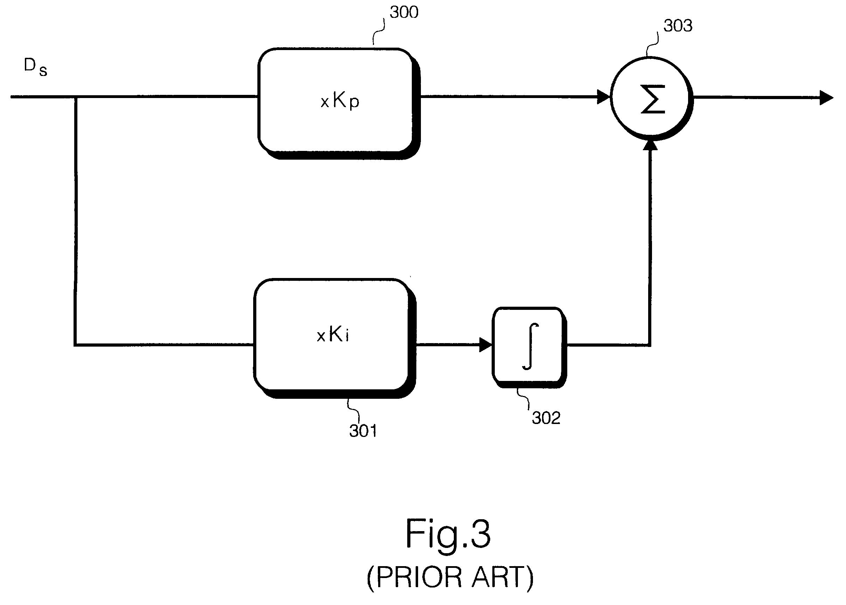

Referring to Fig. 3 herein, there is illustrated in further detail loop filter 202. The loop filter comprises a first amplification stage 300; the first amplification stage arranged in parallel with an integration stage, the integration stage comprising an integral gain amplification stage 301 and an integrator 302; and an addition stage 303 for adding resultant outputs of the first amplification stage and the integration stage. First amplification stage 300 applies to the difference signal Dₛ a proportional gain K_{P} which is proportional to the difference signal Dₛ, whereas second amplification stage 301 applies an integral gain Kᵢ to the difference signal Dₛ.

The loop filter 202 provides active gain within a feedback loop comprising clock reference signal generator 200, phase comparator 201 and loop filter 202. Under steady state conditions, where the incoming read channel signal R_{S} is read at a constant rate, the encoded clock reference signal in the read signal is of constant frequency. The active gain contained in the loop filter operates to phase lock the generated clock reference signal Cᵣ to the incoming read data channel signal R_{S}, so that the generated clock reference signal Cᵣ tracks the encoded clock reference signal embedded in the read data channel signal R_{S} both in phase and frequency.

However, in the conventional clock recovery unit there is a problem that the conventional phase locked loop may lock onto an harmonic frequency of the clock reference signal frequency. The conventional phase locked loop clock recovery unit may accommodate a range of frequency variations due to varying tape speed, slippage, etc of the order of ± 10%. A problem occurs in acquiring lock onto the frequency. Lock may need to be re-aquired after a "drop-out", ie a temporary loss of read signal due to a defect on the tape. Harmonic locking can be problematic in many prior art phase locked loops, if a loop bandwidth is low. Where the clock reference signal has a fundamental frequency f₁, harmonic frequencies of the fundamental clock reference frequency f₁ will occur at integer multiples of the fundamental frequency, ie at Nf₁, where N is an integer number greater than one. Under conditions of harmonic locking, a phase error signal D_{S} produced at output of phase comparator 201 is zero, and consequently a modified difference signal D_{M} output from loop filter 202 is insufficient to cause significant variation in the frequency of generated clock signal Cᵣ produced by the clock generator 200 to change frequency of the generated clock signal away from the harmonic frequency. For practical purposes, the conventional clock recovery circuit may lock to an harmonic of the encoded clock reference signal, as if it had locked to the fundamental frequency f₁ of the clock reference signal.

In a variable speed tape drive, where the tape speed varies over a wide range, a fundamental frequency of a clock signal may vary over several octaves. In these circumstances, harmonic locking may occur using the prior art phase locked loop, regardless of loop bandwidth. A first specific implementation according to the present invention uses a coarse speed signal S which is related to actual tape speed past the read/write head to limit a clock signal recovery circuit to operate within a coarse frequency range, within which a fundamental frequency of the encoded clock reference signal may be found. A guidance signal is given to a phase locked loop, with the object of giving guidance as to a coarse frequency range within which the phase locked loop must operate, without introducing any additional perturbations in the recovered clock signal.

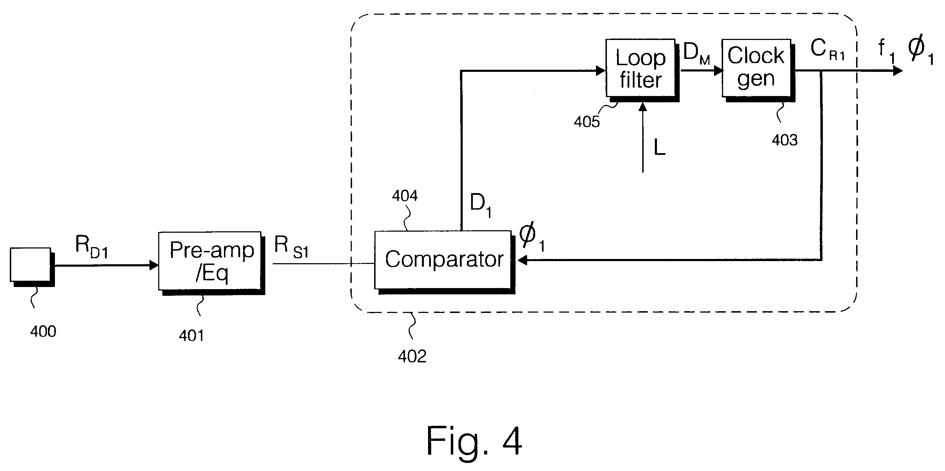

Referring to Fig. 4 herein, there is illustrated schematically a read channel for reading a data track of a magnetic tape, the read channel comprising a clock recovery channel for recovering a digitally encoded clock reference signal from digitally recorded data recorded on the physical data track of the magnetic tape. The clock recovery circuit is capable of operating for detecting encoded clock reference signals having a fundamental frequency f which is variable over a decade range wherein a minimum encoded clock reference signal frequency fₘᵢₙ may be of the order of ten times smaller than a maximum encoded clock reference signal frequency fₘₐₓ. Such a frequency range corresponds to a variation in tape speed over a decade range, since data recorded onto the tape has an encoded clock signal having a substantially constant spatial wavelength along the length of the tape. Playback of data at variable tape speeds gives rise to a recovered data channel signal R_{D1} of variable frequency. The clock reference signal fundamental frequency f is approximately proportional to tape speed past a read/write head, and a ten to one ratio variation in clock reference signal fundamental frequency corresponds approximately to a ten to one variation of tape speed past the read/write head.

In Fig. 4 there is shown a first read element 400 which reads a corresponding physically recorded data track from a magnetic tape as the magnetic tape passes a read head. The read element 400 is provided with a corresponding clock signal recovery channel comprising pre-amplifier/equalizer 401, and clock recovery element 402. Clock recovery element 402 comprises a digital clock signal generator 403; a phase comparator 404; and a loop filter 405. Read element 400 generates a recovered data channel signal R_{D1} from a first physically recorded data track on tape which is input into conventional pre-amplifier and equalizer 401. The pre-amplifier/equalizer amplifies and performs equalization of the recovered data channel signal R_{D1} to produce an amplified equalized recovered data channel signal R_{S1} in the form of a serial sequence of digital pulses representing the encoded data recorded onto the physical track of magnetic tape. The digital pulses are produced in a form suitable for input to clock recovery element 402. The clock recovery element comprises a digital clock generator 403 capable of generating a digital clock reference signal C_{R1} at a first controllable frequency f₁, and having a first phase Ø₁, the frequency f₁ being variable over a dynamic range having ratio of the order ten to one; phase comparator 404 operates to compare the first phase Ø₁ of the generated clock reference signal C_{R1} output from the clock generator 403 with the amplified data channel signal R_{S1} which is output from the pre-amplifier/equalizer 402; the phase comparator 404 outputting a difference signal D₁ which depends upon a difference between a phase of the embedded clock reference signal encoded into the first data channel signal R_{S1} and a phase Ø₁ of the first generated clock signal C_{R1}, the first difference signal D being input into a loop filter 405, the loop filter 405 providing active gain to the difference signal D₁, and outputting a modified difference signal D_{M} which is fed into the clock generator 403. The phase Ø₁ and frequency f₁ of the generated clock signal output from clock generator 403 is modified in response to the difference signal D_{M}.

To prevent loop filter 405 locking to an harmonic of the fundamental frequency f of the encoded clock reference signal, the loop filter receives a limit signal L which limits the modified difference signal D_{M} input into clock generator 403 to limit its range of frequency operations.

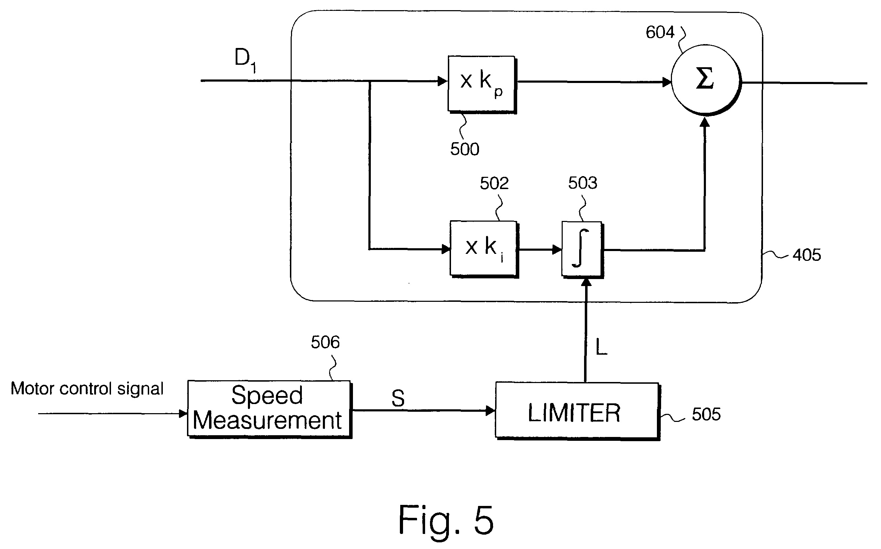

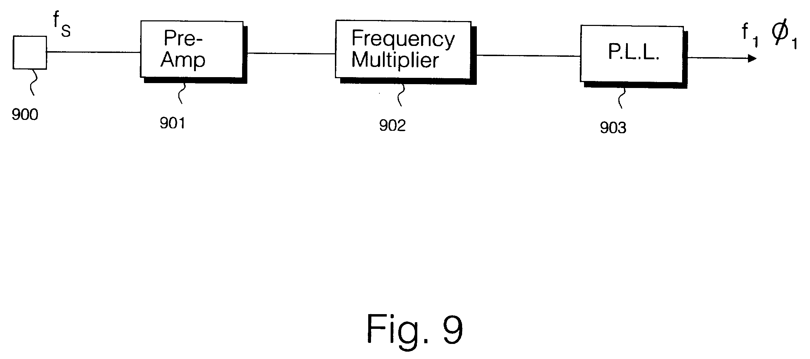

Referring to Fig. 5 herein, there is illustrated in further detail loop filter 405 of the clock recovery element 402. The loop filter 405 comprises a proportional gain amplifier 500 which amplifies difference signal D₁ by a proportional gain K_{P}; an integral gain amplifier 502 operating to amplify the difference signal D₁ by an integral gain K_{I}; an integrator 503 performing an integration of an output of the integral gain amplifier 502; an integrator 503 which integrates an output of integral gain amplifier 502; and a summation element 504 operating to add the amplified outputs of the proportional gain element 500 and integrator 503. The integrator 503 is restricted in the values which it is capable of storing, in response to a limit signal L produced by limiter 505. The limiter 505 receives a coarse speed signals from a speed measurement device 506 in order to produce limit signal L. The speed measurement device may comprise a device for measuring tape speed from for example, a drive mechanism of a reel, or alternatively a motor driving the tape, or may comprise a device for reading a tape speed from a servotrack signal recorded onto the magnetic tape. In the tape drive mechanism, there may be closed loop control of tape speed. Thus, an appropriate speed signal may be available from the closed loop control to provide the coarse speed signal S. Alternatively, a coarse speed signal S may be determined from timing signals T produced by a servotrack as illustrated in Fig. 9 hereinafter. In general the measurement of tape speed is a coarse measurement and without a high degree of accuracy, but serves to broadly represent the speed of the tape past the read element 400.

Whilst it is possible to use the coarse tape speed measurement S as a direct input into a phase locked loop loop filter, this approach is undesirable due firstly to noise in the coarse tape speed measurement S, and secondly due to the possibility of offsets from, for example reel diameter calculation tolerances. Using a coarse speed measurement S to constrain a range of recovered clock frequencies, may avoid a danger of harmonic locking without introducing noise and/or offsets.

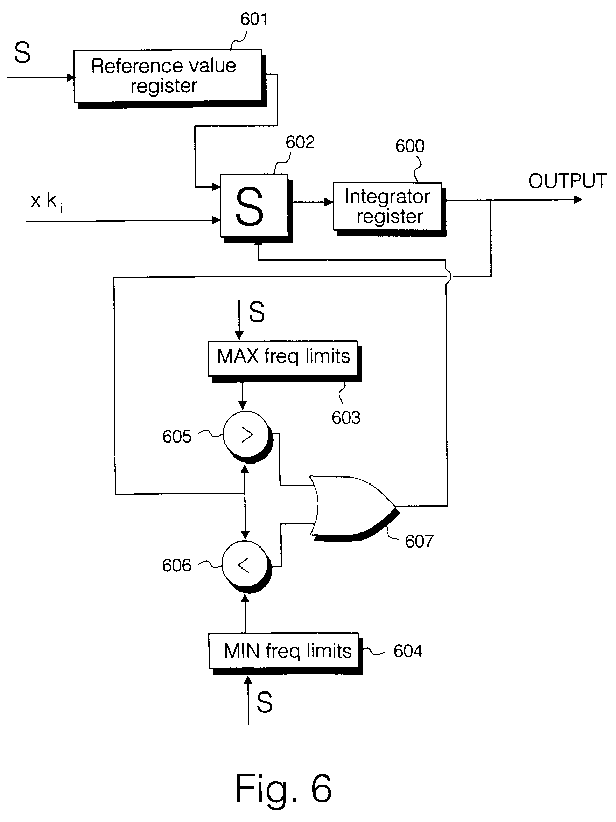

Referring to Fig. 6 herein, there is illustrated schematically main functional elements of a specific implementation of limiter 505, and integrator 503. Actual implementation in a practical system may be carried out by configuring a prior art microprocessor, for example a Motorola M 68000 processor or similar to provide functional elements as illustrated in Fig. 6, or by constructing an appropriate application specific integrated circuit having the elements described in Figs. 5 and 6.

The integrator element 503 comprises a register 600 which stores a digital integrator value. The digital value stored in integrator register 600 represents a frequency value approximating a fundamental frequency of the clock reference signal during correct operation of the phase locked loop, when correctly tracking the fundamental frequency f. The integrator register is clocked at the incoming bit rate, in which the integrator register's previous value is added to the input, to provide the integrator register's present value. However, if the loop filter 405 locks to an harmonic of the clock reference signal frequency, the value stored in integrator register 600 will not be representative of the fundamental clock reference signal frequency f, but rather will be representative of the harmonic frequency having a value at an integer multiple of the fundamental frequency . Limiter circuit 505 comprises a reference register 601 storing a digital nominal integrator reference value Iₙ representing a nominal fundamental clock reference frequency fₙ, determined from the coarse speed signal S, an output of the reference register 601 being switchable for resetting a value of the integrator register 600 to the reference value through switch 602, in response to limit signal L; a maximum limit register 603 storing an upper limit value signal Iₙ representing a maximum clock signal frequency determined from coarse speed signal S; a minimum limit register 604 storing a lower limit value I_{L} representing a minimum clock signal frequency limit determined from coarse speed signal S; first and second comparators 605, 606 respectively, for comparing an output of the integrator register 600 with upper and lower limit values stored in the maximum limit register 603 and the minimum limit register 604, outputs of the first and second comparators 605, 606 being fed into OR gate 607 which generates the limit signal L if the value I in the integrator register 600 falls outside the upper limit value Iᵤ stored in the maximum limit register 603 or outside the lower limit value I_{L} stored in the minimum limit register 604.

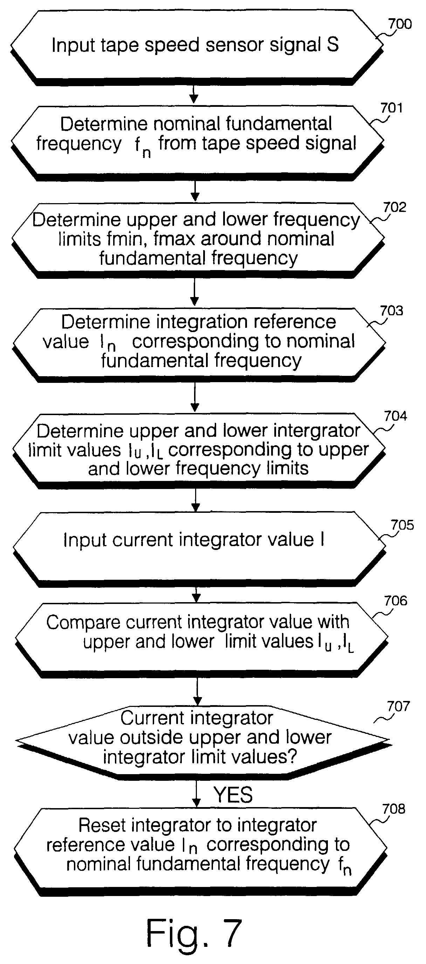

A sequence of operation of the limiter circuit and integrator illustrated in Fig. 6 is shown schematically in Fig. 7 herein. In step 700, a coarse speed signal S is input into the reference value register 601, the maximum limit register 603 and the minimum limit register 604. The processor determines a nominal integrator value Iₙ, which corresponds to a nominal fundamental frequency fₙ determined from the coarse tape speed signal S in step 701 by applying a pre-determined constant multiplier value to the input coarse speed signal S. This constant is known beforehand, since when recording onto tape it is desirable that each bit of information recorded onto the tape occupies a substantially constant length along the tape. A fundamental value of clock reference signal frequency f is roughly proportional to tape speed past a read/write head. A nominal integrator value Iₙ determined from the coarse tape speed signal S will only be an approximation of the actual value I in integrator register 600, which represents a fundamental frequency of the clock reference signal at any particular tape speed, since the accuracy of measurement of the coarse tape speed signal S is lower than the accuracy of frequency measurement of the actual clock reference signal by the clock recovery circuit illustrated in Fig. 4. However, the nominal integrator value Iₙ is accurate enough to give broad guidance as to whether the loop filter 405 is locked onto the fundamental clock reference signal frequency f, or on to an harmonic of that fundamental clock reference signal frequency. In step 702, upper and lower limits Iᵤ and I_{L} to the nominal fundamental frequency are calculated in real time by applying a predetermined percentage multiplier eg ± 30% to the nominal integrator value Iₙ representing nominal fundamental frequency fₙ determined in step 701. Integration reference value I corresponding to the fundamental frequency f and the upper and lower bounds of the integrator values Iᵤ and I_{L} are determined in steps 703 and 704. These are the values stored in the reference value register 601, the maximum frequency limit register 603 and the minimum frequency limit register 604. The values stored in these registers are directly comparable with the value I stored in the integrator register 600. The value I stored in the integrator register 600, under correct operation where the loop filter 405 is locked to the fundamental frequency, should be between the values Iᵤ, I_{L} stored in the maximum frequency limit register 603 and the minimum frequency limit register 604. This is checked by operation of the first and second comparators 605, 606 respectively. First comparator 605 compares the value I stored in integrator register 600 with the value Iᵤ stored in the maximum frequency limit register 603. If the value I stored in integrator register 600 is greater than that stored in the maximum frequency limit register 603, comparator 605 outputs a signal to OR gate 607, which then produces the limit signal L which activates the switch 602. Switch 602 routes the nominal integrator value Iₙ stored in the reference value register 601 and feeds this value to the integrator register 600, thereby setting the integrator register to the nominal integration reference value Iₙ corresponding to the nominal fundamental frequency determined from coarse tape speed signal S. This value is approximately correct for the fundamental frequency of the clock signal, and resetting the integrator register 600 in this way prevents the loop filter from locking to an harmonic of the fundamental frequency. Similarly, second comparator 606 compares the value I of the integrator register 600 with the value I_{L} stored in the minimum frequency limit register 604, and if the integrator register value I falls below the minimum frequency limit register 604 value I_{L}, second comparator 606 outputs a signal to OR gate 607 which outputs the limit signal L to activate switch 602 thereby resetting the value in the integrator register 600 to a value Iₙ which represents the nominal fundamental frequency determined from coarse tape speed S.

The values I, Iᵤ, I_{L} respectively stored in reference value register 601, maximum frequency limit register 603 and minimum frequency limit register 604 are continuously and dynamically updated in real time, so that as the tape speed accelerates or decelerates, the value Iₙ in the reference value register 601 increases or decreases accordingly, as do the values in the maximum frequency limit register 603 and minimum frequency limit register 604. Thus, the range of frequencies allowable by the values stored in the maximum frequency limit register 603 and minimum frequency limit register 604 track a band of frequencies within a predetermined and pre-settable range, eg ± 30%, of the approximate nominal frequency fₙ determined from the coarse speed signal S. If the phase locked loop locks to any frequency outside this range, the first or second comparators 606, 606 detect the disparity between the value I of the integrator register 600 and the maximum frequency limit and minimum frequency limit register values Iᵤ, I_{L} and resets the integrator register 700 to a value Iₙ representing the nominal fundamental frequency determined from the coarse tape speed S. The value stored in the reference value register 601 tracks dynamically to a value which corresponds to the nominal frequency fₙ, which approximates the fundamental frequency f.

A similar problem of harmonic locking may also occur in a variable frequency clock signal generation circuit for generating a write clock signal for encoding dynamically into data recorded on tape as the tape passes a write element.

According to a second implementation of the present invention, there is generated a clock reference signal which is encoded into recorded data during a write operation of the encoded data onto an elongate length of magnetic tape, under conditions of variable tape speed during writing.

An objective of recording data onto a magnetic tape is to pack as high a density of data onto the tape as possible. This involves recording bits of data onto tape so that each bit occupies as near constant length of tape as possible. The encoded clock signal gives a reference signal to which a read channel can lock onto for determining timing of recovered data. Thus, ideally, the clock signal has a constant spatial periodicity along the length of the tape also.

In a preferred implementation according to the present invention, an elongate band of magnetic tape is formatted with a servotrack signal which serves as a basis for determining a fundamental frequency of a generated clock signal. The servotrack signal has a spatial periodicity which is substantially uniform along the length of the tape. The servotrack signal is used as a reference to obtain a clock signal. The servotrack signal varies in frequency as the tape speed past the read/write head accelerates or decelerates. The actual clock signal itself is generated by a variable frequency clock signal generator, which is locked to the frequency of a multiple of the servotrack signal.

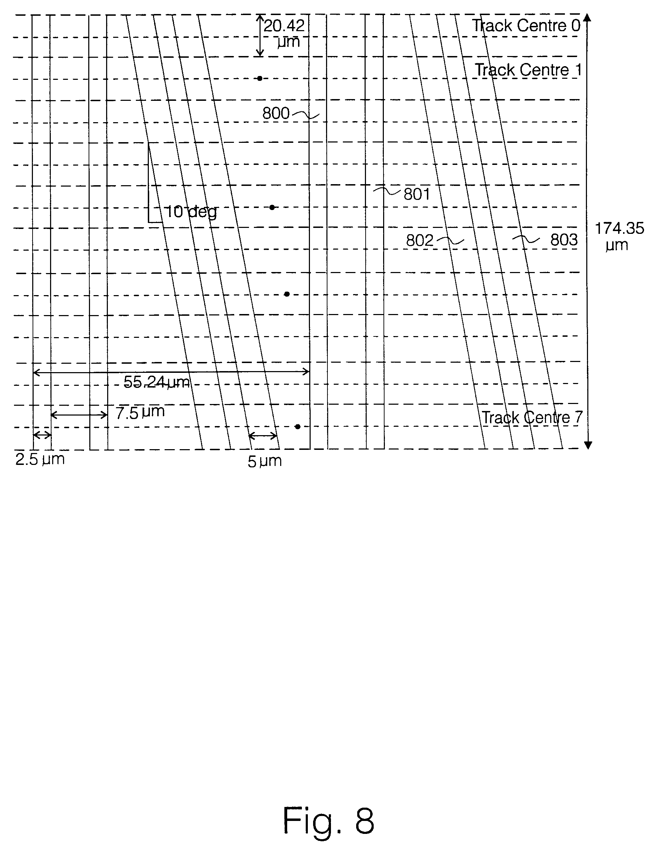

Referring to Fig. 8 herein, there is illustrated a magnetic tape onto which is recorded a servotrack signal in the form of a band pattern. The servotrack band pattern comprises a pattern of magnetizations arranged transverse to a main length of the tape. The servotrack signal comprises a relatively stable signal having a fixed spatial wavelength along the length of the tape. A blank initialized tape may consist of a number of such servotrack band patterns written in parallel along its length. Each servotrack band consists of a magnetization pattern having a width across the tape of around 174 µm. A section of the magnetization pattern comprises a first pair of transition 800, 801 each of thickness of the order 2.5 µm extending parallel to each other marked in a direction perpendicular to the main length of the tape, followed by a second pair of parallel transitions 802, 803 each of thickness of the order 5 µm extending transverse to the direction of the main length of the tape and transverse to a width direction of the tape, being positioned obliquely across the tape. The magnetization line pattern repeats periodically along the length of the tape with a substantially constant spatial period. The magnetization pattern is read by a servotrack read element of the read/write head, which generates a timing signal T in response to the perpendicular transitions 800, 801 and the oblique transitions 802, 803. A timing between signals read from the first pair of transitions and the second pair of transitions produces a read servotrack signal which has a frequency which is proportional to the tape speed.

As during a write operation, the speed of the tape past the read head varies, depending upon the rate of data arriving at the tape data storage device from a data source, the servotrack frequency will vary with tape speed. The frequency of the clock reference signal encoded into the data recorded onto tape must also vary proportionally to the speed of the tape, if the clock reference signal is to have a constant spatial wavelength along the length of the tape when recorded. To obtain such a clock reference signal frequency for encoding dynamically into data prior to writing to the tape, this signal can be obtained by multiplying the frequency of the servotrack signal, and applying a suitable multiplication factor and generating a separate write clock signal using a phase locked loop. A phase of the multiplied servotrack signal frequency is compared with a phase of the write signal generated by the phase locked loop. Benefits of using a phase locked loop to generate a write clock signal include:
- immunity of write clock signal to missing servotrack band features, eg due to tape defects
- minimization of effects of jitter in arrival times of servo features resulting from noise in the signal read from the tape

Referring to Fig. 9 herein, there is illustrated a write clock generation channel of a magnetic tape date storage device. The write clock generation channel comprises a read element 900 reading a servotrack signal having frequency fₛ from a servotrack recorded on a length of magnetic tape passing the read element; preamplifier 901 which amplifies the servotrack signal and inputs an amplified servotrack signal into phase locked loop element 903 which is configured as a write clock generator outputting a write clock signal having a frequency proportional to tape speed past the read element 900. The phase locked loop element includes a frequency multiplication of the amplified servotrack signal represented schematically as multiplier 902 in Fig. 9. The frequency of the read servotrack signal is proportional to the speed of the tape past the read head. However, the servotrack signal is of a lower frequency than a clock reference signal frequency required for encoding into data recorded onto the tape. Thus, frequency multiplication of the servotrack signal is necessary in order to compare phases of the clock reference signal and the servotrack signal. The clock signal output from the phase locked loop 903 has a frequency which is an integer multiple of the servotrack signal frequency, and which is directly proportional to the speed of the tape past the read head. The clock reference signal is then used to encode data, for recording onto the tape through a write head, which is in fixed physical relationship to the read element.

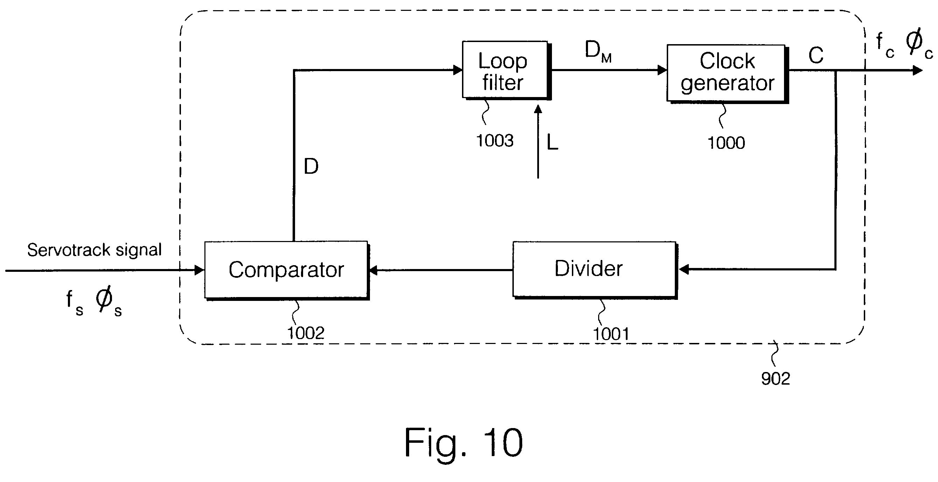

Fig. 10 herein illustrates schematically phase locked loop 902 in greater detail. The phase locked loop comprises a clock generator 1000 generating a clock reference signal having fundamental frequency f and phase Ø; divider 1001 for dividing the clock reference signal by an integer number; comparator 1002 which receives the output of divider 1001 and the servotrack signal, and compares the divided frequency clock reference signal with the input servotrack signal, the comparator producing a difference signal D depending upon a difference in phase between the divided clock reference signal and the input servotrack signal; and loop filter 1003 operating to produce a modified difference signal D_{M} for inputting into clock signal generator 1000 such that clock signal generator 1000 increases or decreases the frequency of the clock reference signal in response to the difference signal D produced by comparator 1002.

In practice, the phase locked loop, may be implemented as an array of logic gates comprising an application specific integrated circuit (ASIC) or as a microprocessor, eg a Motorola 68000 series processor programmed to implement a sequence of steps as described hereinafter.

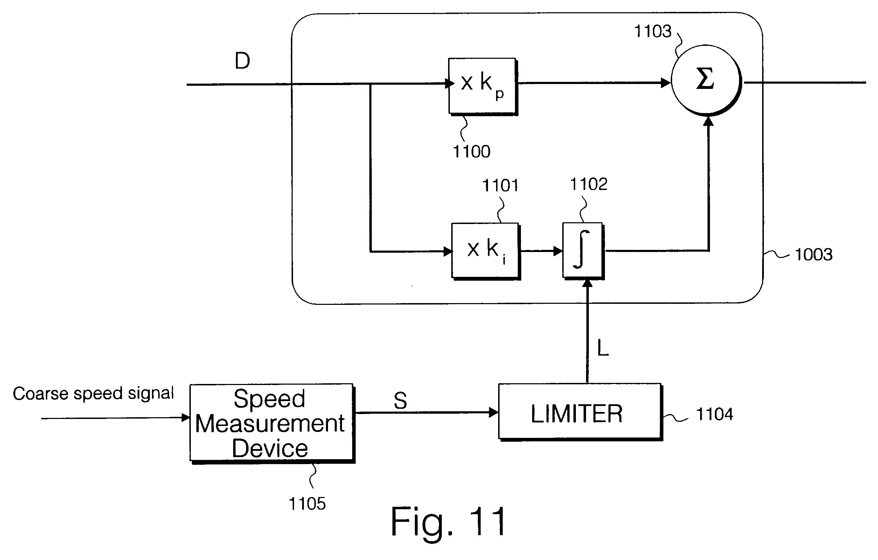

Referring to Fig. 11 herein, there is illustrated details of loop filter circuit 1003, and a circuit for generating limit signal L. Loop filter 1003 comprises a proportional gain element 1100 applying a gain Kₚ of the difference signal D; an integral gain element 1101 applying an integral gain Kᵢ to the difference signal D; an integrator 1102 storing an integrator value representative of a fundamental frequency of the servotrack signal; and an addition element 1103 for adding outputs of the integrator 1102 and proportional gain amplifier 1100. The circuit producing limit signal L comprises limiter 1104 and speed measurement device 1105 producing a coarse speed signal S in response to a tape speed sensor. The coarse speed signal S is obtained as described previously with respect to the first specific implementation. The value stored by integrator 1102 is constrained by a limit signal L produced by limiter circuit 1104. The bandwidth of the phase locked loop is selected for optimization of insensitivity to jitter in the input servotrack signal, and response time to changes in frequency of the servotrack signal, and the proportional gain values K_{P} and integral gain value K_{I} are selected accordingly.

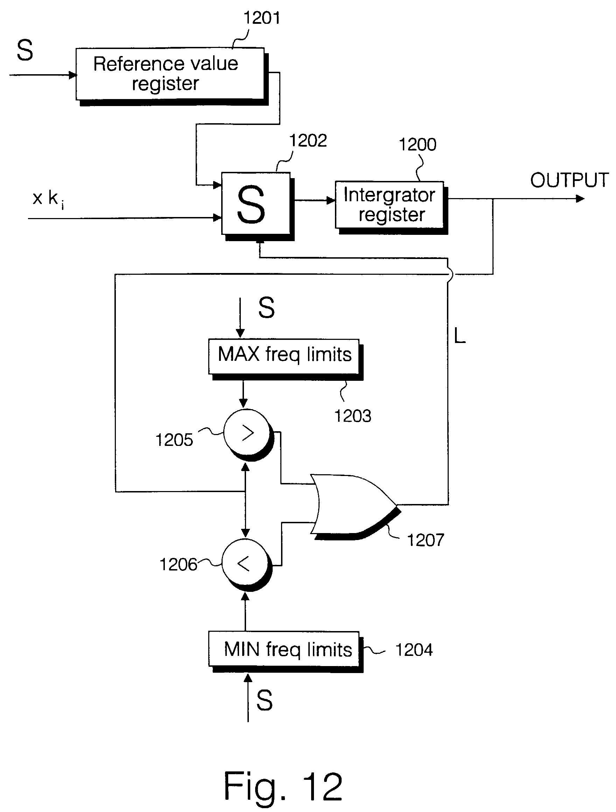

Referring to Fig. 12 herein, there are shown elements of the integrator 1102 and limiter circuit 1104. The integrator comprises an integrator shift register 1200 which stores an integrator value I which represents a fundamental frequency fₛ of the servotrack signal. The limiter circuit comprises a reference value register 1201 which stores a nominal integrator value Iₙ corresponding to a nominal fundamental frequency fₙ of the servotrack signal. This nominal value is determined from the coarse speed signal S, for example by applying a predetermined multiplication factor to the coarse speed signal S. The limiter circuit also comprises maximum and minimum frequency registers 1203, 1204 respectively which store values representing nominal upper and lower limits Iᵤ, I_{L} of integrator value which correspond to a frequency range around the fundamental frequency of the servotrack signal. The value stored in the reference value register 1201 and the upper and lower frequency limit registers 1203, 1204 are dynamically updated as the frequency of the servotrack signal increases or decreases due to tape speed increase or decrease. Similarly, the value stored in integrator register 1200 which is determined from the servotrack signal also increases or decreases depending upon the fundamental frequency of the servotrack signal which changes as the tape speeds up or slows down. Since the generated clock signal has a frequency f_{c} which is an integral multiple of the frequency fₛ of the servotrack signal, the value I stored in integrator register 1200 is also representative of the frequency of the generated clock signal. However, the integrator may lock to an harmonic frequency of the servotrack signal fundamental frequency fₛ. To avoid the danger of harmonic locking of the phase locked loop to an unwanted harmonic of the servotrack signal frequency, integrator element 1200 of phase locked loop 1002 is limited by a limit signal produced by limiter 1201 as shown in Fig. 12 herein. The limit signal produced by limiter 1201 is determined similarly as illustrated herein with reference to Fig. 7. The limiter circuit prevents locking of the integrator register to an harmonic frequency of the servotrack signal by applying a limit signal L to switch 1202 which resets the value stored in integrator register 1200 to a reference value corresponding to a nominal fundamental frequency fₙ of the servotrack signal determined from the coarse speed measurement signal S. Limit signal L is generated whenever the value stored in integrator register 1200 exceeds upper or lower integrator limits Iᵤ, I_{L} respectively stored in maximum and minimum frequency limit registers 1203, 1204 respectively. Comparators 1205, 1206 compare the value stored in integrator register 1200 with the upper limit and lower limit respectively, and produces a signal whenever the integrator register value I exceeds these limits, the signal being input into OR gate 1207 which generates limit signal L.

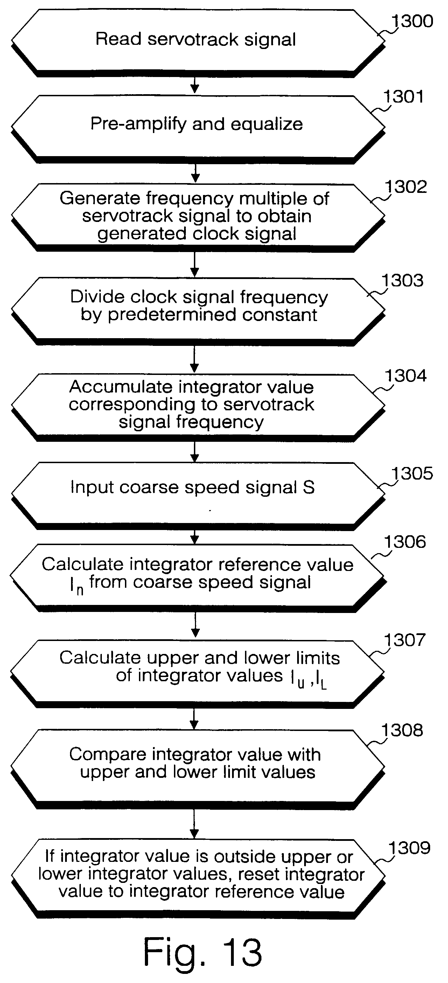

A method of operation of the circuit of Figs. 9 to 12 is described with reference to Fig. 13 herein. In step 1300, the servotrack signal is read by the read element, and is pre-amplified and equalized in step 1301. In step 1302, clock generator 1000 generates a clock signal which has a frequency f_{c} which is a pre-determined multiple of the frequency fₛ of the servotrack signal. In step 1303, the clock signal is divided in frequency, by a predetermined division constant in divider 1001, and the divided frequency signal is input into comparator 1002. The divided frequency clock signal is compared with the servotrack signal in comparator 1002 which generates a difference signal D which is fed into loop filter 1003. The loop filter accumulates an integrator value I corresponding to the servotrack signal frequency in step 1304. In step 1305, a coarse speed signal S is input into limiter circuit 1104 which determines an integrator nominal reference value Iₙ from the coarse speed signal S in step 1306. In step 1307, the limiter circuit also calculates upper and lower integrator values Iᵤ, I_{L} corresponding to maximum and minimum frequency limits for the fundamental frequency fₛ of the servotrack signal the upper and lower integrator limits being stored in registers 1203, 1204. In step 1308, the value I in the integrator register 1200 is continuously and dynamically compared with the maximum and minimum limit values Iᵤ, I_{L} stored in maximum and minimum frequency limit registers 1203, 1204 respectively. If the value stored in integrator register 1200 exceeds the value stored in either of the maximum or minimum frequency limit registers 1203, 1204 respectively, comparators 1205, 1206 detect the discrepancy and generate signals which are input into OR gate 1207, resulting in the limit signal L, which resets the integrator register 1200 to adopt the integrator reference value stored in reference value register 1201 in step 1309, thereby correcting the value I stored in integrator register 1200 to a value Iₙ which represents a broad approximation of the nominally correct servotrack signal frequency fₛ, as determined from the coarse speed signal measurement S.

## Claims

1. A method of determining a frequency of a reference clock signal in a magnetic tape data storage device, said method comprising the steps of:
generating a read signal corresponding to a signal recorded on a tape;
generating a clock reference signal corresponding to said recorded tape signal;
generating a difference signal representing a difference between said recorded tape signal and said generated clock reference signal;
obtaining a signal representing a fundamental frequency of said recorded tape signal from said difference signal; and
constraining said signal representing a fundamental frequency of said recorded tape signal.

2. The method as claimed in claim 1, wherein said signal representing a fundamental frequency of said recorded tape signal is constrained in response to a signal representing a speed of tape.

3. The method as claimed in claim 1 or 2, wherein a said signal representing a fundamental frequency of recorded tape signal is constrained within upper and lower limits, said upper and lower limits being determined from a signal representing a speed measurement of a tape.

4. The method as claimed in any one of the preceding claims, wherein said signal representing a speed of said tape is determined from a control signal of a tape drive mechanism.

5. The method as claimed in any one of the preceding claims, wherein said read signal comprises a fundamental frequency representative of a tape speed.

6. The method as claimed in any one of the preceding claims, wherein said signal recorded on tape comprises a servotrack signal pre-recorded onto a length of tape.

7. The method as claimed in any one of claims 1 to 5 wherein said recorded tape signal comprises an encoded clock reference signal.

8. The method as claimed in any one of the preceding claims, wherein said step of constraining said signal representing a fundamental frequency of said recorded tape signal comprises:
determining a lower limit signal representing a lower limit of a fundamental frequency of said read signal;
determining an upper limit signal representing an upper limit of fundamental frequency of said read signal; and
comparing said signal representing fundamental frequency with said upper limit signal and said lower limit signal.

9. The method as claimed in any one of claims 1 to 7, wherein said step of constraining said signal representing a fundamental frequency comprises:
determining a nominal value signal representing a nominal fundamental frequency of said read signal, said nominal value signal determined from a measurement of tape speed; and
re-setting said signal representing a fundamental frequency to a value of said nominal value signal representing a nominal fundamental frequency of said recorded tape signal.

10. The method as claimed in any one of the preceding claims, wherein said step of generating a clock signal corresponding to said recorded tape signal comprises tracking a phase of said generated clock signal to a phase of a fundamental frequency of said recorded tape signal.

11. The method as claimed in any one of the preceding claims, wherein said signal recorded on tape has a substantially constant wavelength along the length of said tape.

12. A magnetic tape data storage device having a clock signal write circuit comprising:
clock signal production means for producing a clock signal from a signal recorded on tape;
means for determining a coarse expected value of clock signal frequency from a measurement of tape speed;
means for determining upper and lower limits of an expected clock signal frequency from said tape speed measurement; and
wherein said means for producing a clock signal from said signal recorded on tape is reset to adopt a value specified by said means for determining a coarse expected value of clock signal frequency from said tape speed, whenever said clock signal production means produces a clock signal having a frequency outside said limits.

13. A method of determining a frequency of a reference clock signal in a magnetic tape data storage device, said method comprising the steps of:
reading a pre-recorded tape signal;
generating a clock reference signal, said clock reference signal having a fundamental frequency being an integer multiple of a fundamental frequency of said recorded tape signal;
generating upper and lower limit signals representing upper and lower limits of said fundamental frequency of said generated clock signal;
continuously comparing said generated clock signal with said upper and lower limits; and
if said generated clock signal exceeds said upper or lower limits, resetting said fundamental frequency to a nominal frequency determined from a tape speed measurement.

14. A magnetic tape data storage device having a clock signal recovery circuit comprising:
clock signal production means for producing a clock signal from a clock signal encoded in data signal recorded on tape;
means for determining a coarse measurement of clock signal frequency from a measurement of tape speed; and
means for determining upper and lower limits of an expected clock signal frequency, from said tape speed measurement;
wherein said means for producing a clock signal from said data signal recorded on tape is reset to adopt a value specified by said means for determining a coarse measurement of clock signal frequency from said tape speed, whenever said clock signal production means produces a clock signal having a frequency outside said limits.
